# FASCICULE DE BREVET EUROPEEN

(11) **EP 1 022 559 B1**
(45) Date de publication et mention de la délivrance du brevet: **29.08.2007**
(21) Numéro de dépôt: 00400069.1
(22) Date de dépôt: 13.01.2000
(51) Int. Cl.: G01N 21/68

(54) **Equipement d'identification d'effluents gazeux**
Anlage zur Abgasidentifizierung
Equipment for identifying gaseous effluents& xA;

(30) Priorité: 22.01.1999 FR 9900723
(43) Date de publication de la demande: 26.07.2000
(73) Titulaire: Alcatel Lucent, 75008 Paris (FR)
(72) Inventeur: Chevalier, Eric, 74940 Annecy Le Vieux (FR); Maquin, Philippe, 74450 St. Jean de Sixt (FR); Bernard, Roland, 74540 Viuz-La-Chiesaz (FR)
(74) Mandataire: Korakis-Ménager, Sophie

(56) Documents cités:
- WO-A-00/31773
- WO-A-97/13141
- DE-A- 19 505 104
- DE-A- 19 544 506
- US-A- 3 843 257
- US-A- 5 632 821
- US-A- 5 825 485

## Description

L'invention concerne un équipement industriel comprenant au moins une enceinte à pression contrôlée, et un système d'analyse des gaz contenus dans l'enceinte à pression contrôlée.

Les progrès réalisés, lors de ces dernières années dans l'industrie du semi-conducteur, sont essentiellement liés à l'accroissement de l'intégration de circuits électroniques sur des composants de quelques millimètres carrés ; ceci sur des substrats de silicium de plus en plus grand (diamètre de 200 mm à 300 mm).

Les étapes technologiques, nécessaires à la réalisation de tels circuits, sont nombreuses (jusqu'à 400).

Parmi elles, les étapes de traitement sous vide, jouent un rôle essentiel, tant par leurs capacités à produire de façon continue tout au long du procédé de fabrication que par leurs fonctions à respecter les critères géométriques du composant.

La mise en place d'un système d'analyse de procédé in situ, identifie les défauts dés leurs créations, réduisant le temps de réaction pendant lequel un nombre important de lots peuvent être produit.

De ce fait une demande importante apparaît pour le suivi et le contrôle in situ et en temps réel des procédés de fabrication de semi-conducteur par plasma, réalisés sous vide.

Cette demande s'affirme non seulement dans les chambres où sont réalisées les différentes étapes, mais aussi sur les différents composants constituant les lignes de pompage.

Parmi les étapes d'inspection in situ, l'analyse d'éléments organiques, particules, moisissure, ions métalliques, ainsi que tous gaz sous forme gazeuse ou en limite de condensation est importante car elle permet :

De déterminer si les conditions optimales de fabrication sont réalisées ; par exemple, une analyse in situ, effectuée dans le système de pompage de vide, en aval de la chambre de procédé permet un meilleur contrôle de l'environnement des plaques de silicium, améliorant de ce fait les rendements de production.

D'estimer le vieillissement des composants mécaniques constituant la machine et donc, par l'intermédiaire d'une maintenance prédictive, gérer parfaitement le planning de maintenance de la machine en évitant d'aller jusqu'à l'incident.

Le problème rencontré dans la mise en place d'une technique d'analyse de gaz réside dans le coût d'investissement et le gain réalisé par une détection préventive des défauts en comparaison des coûts de production et de qualité générée par les procédés.

De plus, le système d'analyse de gaz doit être de plus en plus petit afin de tenir compte de l'intégration des systèmes de pompages et des équipements semi-conducteurs.

Un analyseur de gaz fonctionnant de 0,1 mbar à 1000 mbar permettrait un suivi des espèces réactives pendant les étapes de procédés ; ceci jusqu'à la sortie de l'équipement sous vide, assurant un meilleur contrôle des gaz relâchés dans l'atmosphère.

On connaît l'analyse résiduelle de gaz (« RGA ») par spectrométrie de masse permettant de détecter toutes les espèces gazeuses neutres ou chargées. Les molécules sont habituellement ionisées dans une chambre d'ionisation par des électrons issus de l'émission thermoïonique d'un filament chaud. Cette technologie est applicable pour une pression inférieure à 10-6 mbar, au-dessus de 10-5 mbar la réponse devient non linaire et au-dessus de 10⁻⁴ mbar le filament peut être détruit.

Pour une analyse de gaz dans l'intervalle souhaité (0,1 à 1000 mbar), la mise en place d'un pompage différentiel est nécessaire, afin de réduire la pression à l'intérieur de la cellule d'analyse, pour éviter la destruction du filament. Ce dispositif de pompage différentiel comprend plusieurs pompe à vide et de nombreuses vannes.

Du fait de l'utilisation de plusieurs pompes à vide et de vannes, le coût d'un analyseur de gaz, fonctionnant à haute pression (0,1 à 1000 mbar), est six fois plus élevé qu'un analyseur de type RGA, analysant uniquement le vide résiduel ; rendant son prix dissuasif vis à vis du coût de la machine fabriquant des semi-conducteurs et des rendements quantitatifs et qualitatifs de celle-ci.

De plus, l'espace occupé par un analyseur de gaz en masse avec pompage différentiel est important, car il intègre plusieurs composants sous vide volumineux. Ceci rend son intégration difficile dans les équipements sous vide actuel, comprenant souvent plusieurs chambres de fabrication.

C'est pourquoi, peu d'équipements sous vide sont équipés avec un analyseur de gaz, malgré une demande de l'industrie.

On connaît par ailleurs l'utilisation de la spectroscopie par émission optique sur des équipements de fabrication de semi-conducteurs. La spectrométrie par émission est utilisée pour effectuer la détection de fin d'attaque dans les procédés de gravure des circuits ou composants semi-conducteurs. Le plasma analysé est celui généré par le réacteur de l'équipement, ce dernier est simplement instrumenté par un spectromètre d'émission qui analyse la lumière du procédé de gravure, permettant un contrôle des étapes du procédé lui-même.

Le but de l'invention, est d'utiliser la spectrométrie par émission optique pour contrôler, non pas les étapes du procédé de fabrication ou de gravure de l'équipement semi-conducteur, mais tous les constituants gazeux de l'environnement sous vide de l'équipement.

A cet effet, l'invention concerne un équipement comprenant au moins une enceinte (3) à pression contrôlée, et un système d'analyse des gaz contenus dans une enceinte sous pression contrôlée, le système d'analyse de gaz comprenant un dispositif pour ioniser les gaz à analyser, et un dispositif d'analyse des gaz ionisés, qui comprend un capteur de radiation, situé à proximité de la zone de génération du plasma, connecté à un spectromètre optique analysant l'évolution du spectre radiatif, émis par le plasma généré.Un tel équipement est connu par le document US-A- 5825485.

Selon l'invention,
le dispositif pour ioniser les gaz à analyser comprend une source de plasma de type ICP générant un plasma à partir des gaz à analyser, combinée avec un générateur radiofréquence.
et le système d'analyse de gaz est rapporté par un raccord extérieur sur l'enceinte dans laquelle les gaz à analyser sont contenus.

La source de plasma est cavité résonante ou de type utilisant le principe de propagation d'une surface d'onde.

une source plasma Radiofréquence de type ICP. Cette dernière nécessite un diélectrique en quartz ou en alumine (cela dépend de la nature chimique des effluents : les gaz fluorés réagissent fortement avec le quartz) qui assure l'étanchéité et la transparence des ondes électromagnétiques.

Le capteur de radiation peut être une fibre optique assurant le captage et le transport du spectre radiatif émis par le plasma généré vers le spectromètre optique.

La sources permet la création d'un plasma à partir des gaz existant dans l'enceinte, ceci en cours de fonctionnement de l'équipement et pour des basses pressions jusqu'à la pression atmosphérique.

Le rendement d'ionisation obtenue par ces types de source plasma est proche de 10 % pour une pression de 10-1 mbar, d'où une très grande sensibilité dans les mesures.

Le spectromètre optique, après diffraction de la lumière, analyse en temps réel, les évolutions et radiations émises par les atomes, molécules et ions, excitées par les électrons libres du plasma.

Ainsi, l'utilisation combinée d'une source de plasma, pouvant fonctionner à la pression atmosphérique et d'un système d'analyse spectrale d'émission optique, permet un diagnostic permanent des gaz se situant à l'intérieur d'une enceinte à pression contrôlée.

L'utilisation d'un pompage différentiel n'est pas nécessaire au fonctionnement de la source d'ionisation, ceci réduit le volume de l'analyseur de gaz et de ce fait il s'intègre facilement sur l'équipement semi-conducteur (en série ou par l'intermédiaire d'un raccord standard).

Enfin le coût de cette technique d'analyse optique est faible car elle associe uniquement une source d'ionisation avec un détecteur optique. Cela facilite sa généralisation sur les lignes de vide des équipements utilisés dans l'industrie du semi- conducteur.

D'autres avantages et caractéristiques de la présente invention résulteront de la description qui va suivre en référence aux dessins annexés dans lesquels :
La figure unique est une représentation schématique d'un mode de montage d'un système selon la présente invention.

Le système d'analyse de gaz 1 selon l'invention est destiné à permettre l'analyse d'effluents gazeux contenus dans une enceinte sous pression contrôlée 3. Celle enceinte 3 pourra être, par exemple, une ligne de vide 3 d'un équipement de fabrication de circuits intégrés semi-conducteurs (non représenté).

Le principe de fonctionnement du système d'analyse des gaz 1 repose sur l'ionisation des gaz et l'analyse du spectre radiatif résultant de l'ionisation des gaz.

A cet effet, le système d'analyse des gaz 1 comprend un dispositif pour ioniser les gaz à analyser constitué d'au moins une source de plasma dédiée 2, au contact des gaz de l'enceinte 3, générant un plasma à partir des gaz à analyser. Cette source de plasma 2 est alimentée par un générateur adapté 6 au type de source de plasma 2 choisie.

La source de plasma 2 est une source plasma Radiofréquence de type ICP. Dans ce cas, le générateur 6 est un générateur RF.

Pour analyser le plasma, le système d'analyse des gaz 1 selon l'invention comprend un dispositif d'analyses des gaz ionisés 4, 5 de type spectromètre optique, ayant une sonde 4 située à proximité de la source de plasma 2 dédiée, analysant l'évolution d'un spectre radiatif, émis par le plasma généré. Le dispositif d'analyse des gaz ionisés 4, 5 comprend une fibre optique sonde 4, dont une extrémité est située à proximité de la source de plasma 2, à l'intérieur de l'enceinte analysée 3, et dont l'autre extrémité est connectée à un spectromètre d'émission optique 5. Les radiations émises par les atomes, molécules, et ions excités par les électrons libres du plasma, sont transmises au spectromètre d'émission optique 5 par l'intermédiaire de la fibre optique 4. Le spectromètre d'émission optique 5 analyse les évolutions de ces radiations et en déduit des informations relatives aux constituants des gaz ionisés.

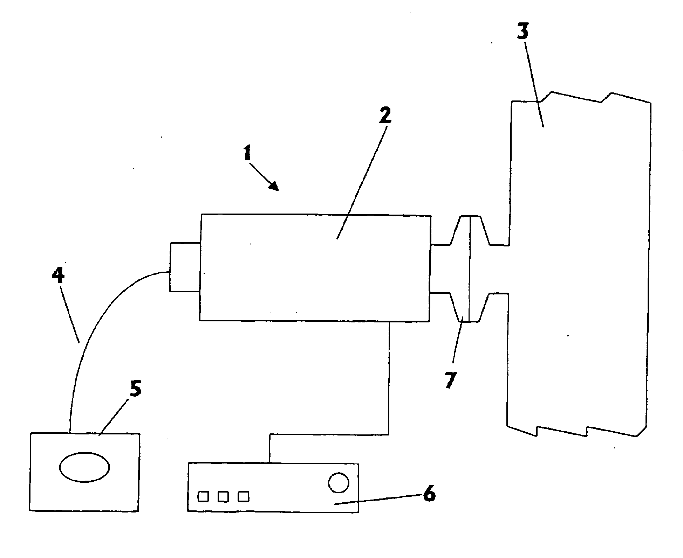

Dans un autre mode de montage représenté sur la figure 2, le système 1 selon l'invention est rapporté sur une enceinte, telle qu'une canalisation 3 par un raccord extérieur 7.

Bien entendu, l'invention n'est pas limitée au mode de réalisation décrit, mais elle est susceptible de nombreuses variantes accessibles à l'homme du métier sans que l'on s'écarte de l'invention.

## Revendications

1. Equipement comprenant au moins une enceinte (3) à pression contrôlée, et un système d'analyse des gaz (1) contenus dans l'enceinte à pression contrôlée, le système d'analyse de gaz (1) comprenant
- un dispositif (2, 6) pour ioniser les gaz à analyser; et
- un dispositif (4, 5) d'analyse des gaz ionisés comprend un capteur de radiation (4), situé à proximité de la zone d'ionisation, connecté à un spectromètre optique (5) analysant l'évolution du spectre radiatif,
**caractérisé en ce que** le dispositif (2, 6) pour ioniser les gaz à analyser comprend une source de plasma (2) de type ICP pour générer un plasma à partir des gaz à analyser, combinée avec un générateur (6) radiofréquence, et **en ce que** le système d'analyse (1) est rapporté par un raccord extérieur (7) sur l'enceinte (3) dans laquelle les gaz à analyser sont contenus.

## Claims

1. A facility including at least one controlled-pressure enclosure (3), and a gas analysis system (1) for analyzing the gases contained in the controlled-pressure enclosure, the gas analysis system (1) comprising:
. apparatus (2, 6) for ionizing the gases to be analyzed; and
. apparatus (4, 5) for analyzing the ionized gases and comprising a radiation sensor (4) situated in the vícinity of the ionization zone and connected to an optical spectrometer (5) for analyzing variation of the radiated spectrum;
the facility being **characterized in that** the apparatus (2, 6) for ionizing the gases to be analyzed comprises an inductively coupled plasma (ICP) type plasma source (2) for generating a plasma from the gases to be analyzed, combined with a radio frequency generator (6), and **in that** the analysis system (1) is mounted via an external coupling (7) on the enclosure (3) in which the gases to be analyzed are contained.

## Patentansprüche

1. Anlage, die mindestens einen Behälter (3) mit kontrolliertem Druck einschließt und ein System zur Analyse der im Behälter mit kontrolliertem Druck enthaltenen Gase (1), wobei das System zur Gasanalyse (1)
- eine Vorrichtung (2, 6) zum Ionisieren der zu analysierenden Gase enthält; und
- eine Vorrichtung (4,5) zur Analyse der ionisierten Gase einen Strahlungssensor (4) einschließt, der in der Nähe des Ionisationsbereichs liegt, verbunden mit einem optischen Spektrometer (5), das die Entwicklung des Strahlungsspektrums analysiert,
**dadurch gekennzeichnet, dass** die Vorrichtung (2, 6) zum Ionisieren der zu analysierenden Gase eine Plasmaquelle (2) des Typs ICP einschließt, die ausgehend von den zu analysierenden Gasen ein Plasma erzeugt, kombiniert mit einem Hochfrequenzgenerator (6) und **dadurch gekennzeichnet, dass** das Analysesystem (1) durch ein äußeres Anschlussstück (7) an den Behälter (3) angesetzt wird, in dem die zu analysierenden Gase enthalten sind,
